(19) Europäisches Patentamt / European Patent Office / Office européen des brevets

(11) **EP 3 734 344 A1**

# EUROPEAN PATENT APPLICATION
published in accordance with Art. 153(4) EPC

(43) Date of publication:
**04.11.2020 Bulletin 2020/45**

(21) Application number: **18897714.4**

(22) Date of filing: **26.12.2018**

(51) Int Cl.:
*G02B 13/04* (2006.01)    *G02B 13/18* (2006.01)

(86) International application number:
**PCT/JP2018/047816**

(87) International publication number:
**WO 2019/131748 (04.07.2019 Gazette 2019/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **28.12.2017   JP 2017253610
28.12.2017   JP 2017253611**

(71) Applicant: **Nittoh Inc.
Suwa-shi, Nagano 392-0131 (JP)**

(72) Inventor: **MOCHIZUKI, Keiichi
Suwa-shi, Nagano 392-0021 (JP)**

(74) Representative: **Körber, Martin Hans
Mitscherlich PartmbB
Patent- und Rechtsanwälte
Sonnenstrasse 33
80331 München (DE)**

## (54)   LENS SYSTEM AND IMAGING DEVICE

(57)    A lens system (10) for image pickup includes, in order from the object side (11), a first lens group (G1) that has negative refractive power and is fixed during focusing, a second lens group (G2) that has positive refractive power and moves during focusing, a third lens group (G3) that has positive refractive power and is fixed during focusing, and a fourth lens group (G4) that has a stop disposed on the object side, is disposed closest to the image plane, has positive refractive power, and is fixed during focusing. The second lens group may include a meniscus-type single lens (L21) or cemented lens with positive refractive power that is concave on the object side.

Fig. 1

EP 3 734 344 A1

**Description**

Technical Field

The present invention relates to a lens system and an image pickup apparatus.

Background Art

Japanese Laid-open Patent Publication No. 2001-228391 discloses a retrofocus-type, inner-focus, wide-angle lens system that has a three-group configuration, a half angle of view of around 44°, and an F number of around 3.5. This wide-angle lens system is composed, in order from the object side, of a negative first lens group, a positive second lens group, and a positive third lens group that includes a stop. During focusing, the second lens group moves in the direction of the optical axis.

Summary of the Invention

There is demand for an image pickup system (imaging system) that is brighter and has little fluctuation in magnification due to focusing.

One aspect of the present invention is a lens system for image pickup including, in order from an object side: a first lens group that has negative refractive power and is fixed during focusing; a second lens group that has positive refractive power and moves during focusing; a third lens group that has positive refractive power and is fixed during focusing; and a fourth lens group that has a stop disposed on the object side, is fixed during focusing, has positive refractive power, and is disposed closest to an image plane side.

This lens system is a retrofocus type with a negative-positive-positive-positive four-group configuration, and is an inner-focus system where only the second lens group moves along the optical axis during focusing. In addition, the lens system has a stop disposed between the third lens group and the fourth lens group that are fixed. A retrofocus-type system where the lens group closest to the object side has negative refractive power is suitable for a wide-angle lens, but since the positive refractive power is strong, for an inner-focus system, there is a tendency for the magnification to change when lenses with positive refractive power move during focusing. For this reason, this lens system uses a configuration where the rear group that has positive refractive power is divided into three groups to disperse the refractive power, thereby suppressing the power of the second lens group that moves during focusing. This means that even if the second lens group moves during focusing, there are hardly any fluctuations in magnification. In addition, by disposing the stop between the third lens group and the fourth lens group that are fixed and do not move during focusing, fluctuations in the F number due to focusing are prevented. This means that it is possible to provide a lens system where the focus can be freely adjusted without having to consider fluctuations in magnification or fluctuations in brightness.

In addition, the second lens group may include a single or cemented meniscus-type lens with positive refractive power that is concave on the object side. The second lens group that moves during focusing and is closest to the first lens group that has negative refractive power may include a single or cemented meniscus-type lens with positive refractive power that is concave on the object side. A retrofocus-type system has a strong positive refractive power, and the Petzval sum tends to increase. In this lens system however, increases in the Petzval sum are suppressed by providing a surface that is concave on the object side in the second lens group that is closest to the object side out of the rear group with positive refractive power, so that a lens system with more favorable aberration correction is provided. In addition, by making the surface that faces the first lens group on the object side concave on the object side, it is possible to bring the second lens group that moves during focusing, in particular the peripheral part of the lens, close to the first lens group that has negative refractive power. This makes it easy to transmit light, including peripheral light, using the second lens group to the lens groups on the image plane side and means that it is possible to provide a lens system that is brighter and has a low F number. Also, by disposing the second lens group with positive refractive power close to the first lens group that has negative refractive power, it is possible to suppress the spreading of light flux, to suppress the size of the third lens group onwards on the image plane side, and to thereby provide a more compact lens system.

The third lens group may include a cemented lens that is disposed adjacent to the stop and is composed, in order from the object side, of a lens with positive refractive power and a lens with negative refractive power, and the fourth lens group may include a cemented lens (first cemented lens) that is disposed adjacent to the stop and is composed, in order from the object side, of a lens with negative refractive power and a lens with positive refractive power.

The cemented lens composed, in order from the object side, of a lens with positive refractive power and a lens with negative refractive power is disposed adjacent to the stop in the third lens group, and the cemented lens composed, in order from the object side, of a lens with negative refractive power and a lens with positive refractive power is disposed adjacent to the stop in the fourth lens group, so that the cemented lenses are arranged with a symmetrical distribution of refractive powers with respect to the stop. Accordingly, it is possible to provide a lens system that favorably corrects various aberrations.

Another aspect of the present invention is an image pickup apparatus (imaging device) including the lens system described above and an image pickup element disposed on an image plane side of the lens system.

Brief Description of Drawings

[Fig. 1]

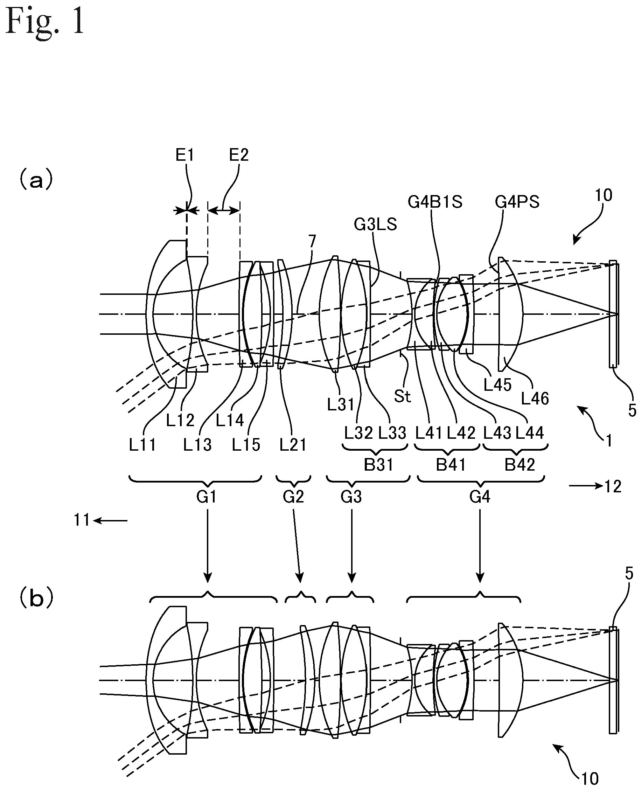

Fig. 1 depicts one example of a lens system and an image pickup apparatus, with Fig. 1(a) depicting a state where the lens system is focused at infinity, and Fig. 1(b) depicting a state where the lens system is focused at a near distance.
[Fig. 2]

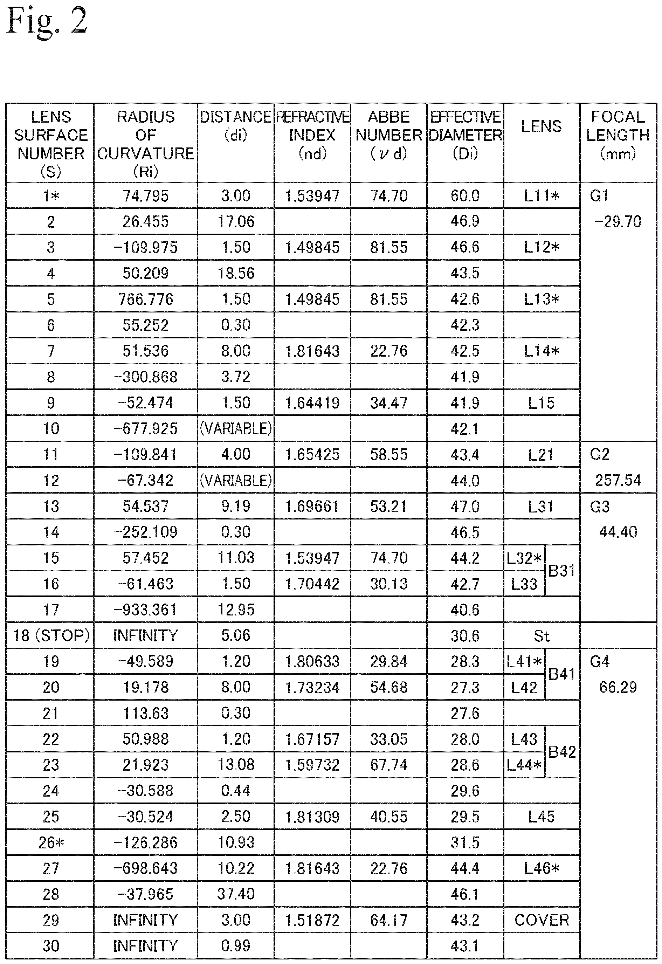

Fig. 2 depicts data on the respective lenses of the lens system depicted in Fig. 1.
[Fig. 3]

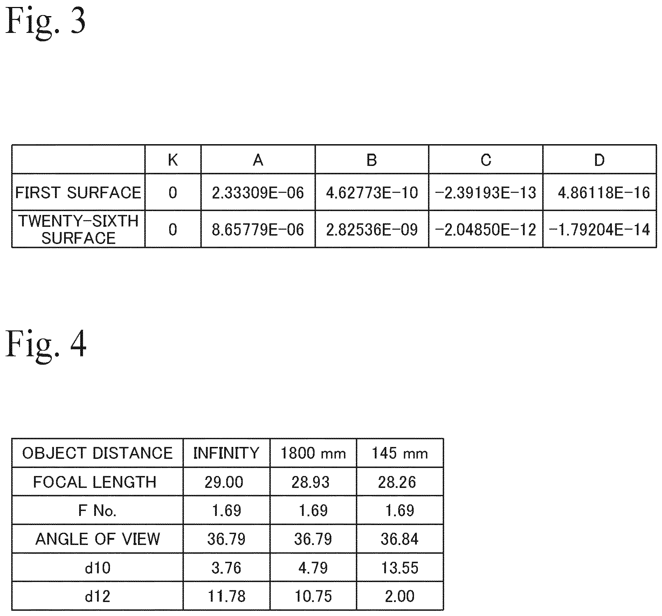

Fig. 3 depicts data on aspherical surfaces in the lens system depicted in Fig. 1.
[Fig. 4]
Fig. 4 depicts various numeric values of the lens system depicted in Fig. 1.
[Fig. 5]

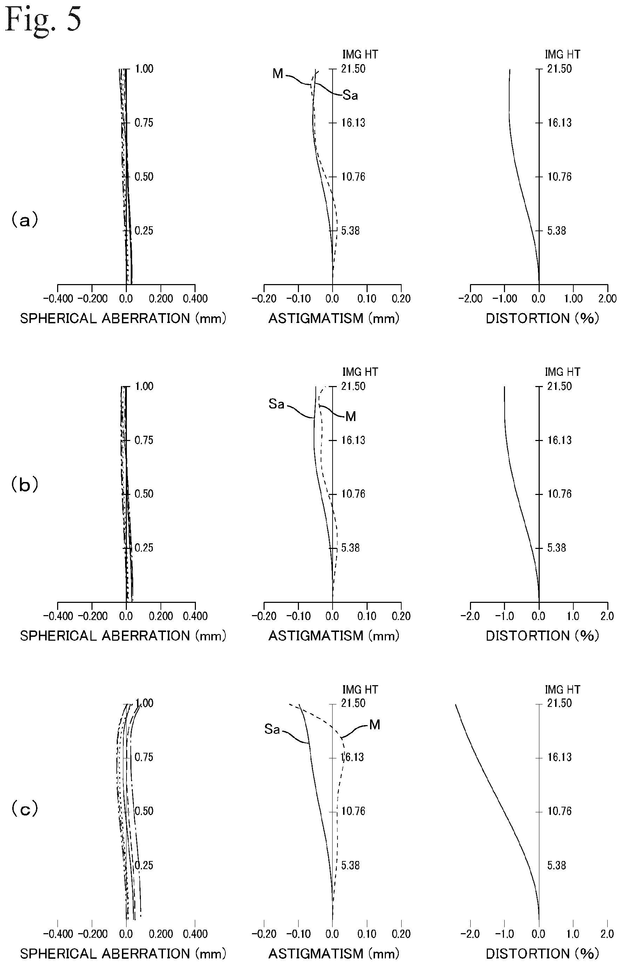

Fig. 5 depicts various aberrations of the lens system depicted in Fig. 1.
[Fig. 6]

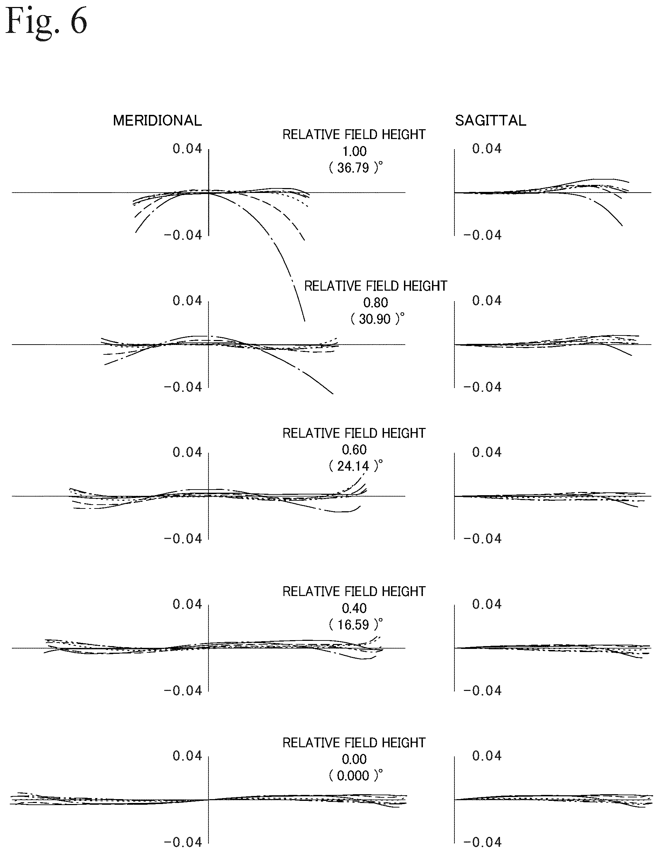

Fig. 6 depicts the transverse aberration at infinity of the lens system depicted in Fig. 1.
[Fig. 7]

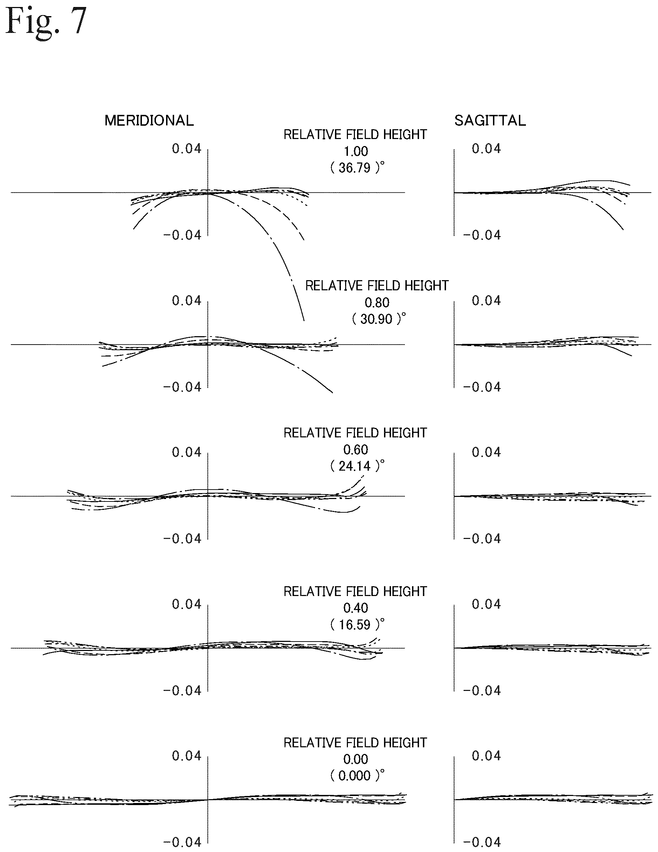

Fig. 7 depicts the transverse aberration at an intermediate distance of the lens system depicted in Fig. 1.
[Fig. 8]

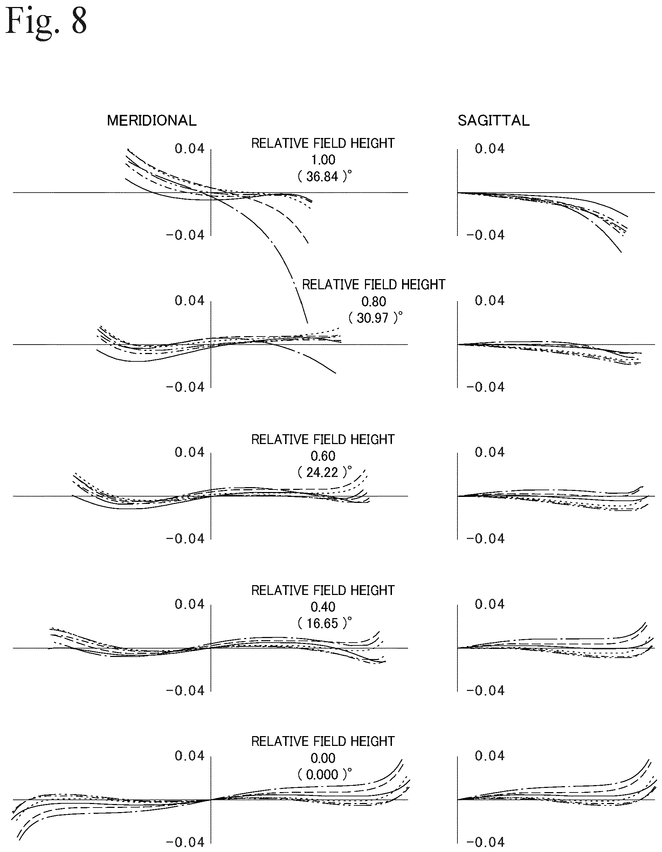

Fig. 8 depicts the transverse aberration at the nearest distance of the lens system depicted in Fig. 1.
[Fig. 9]

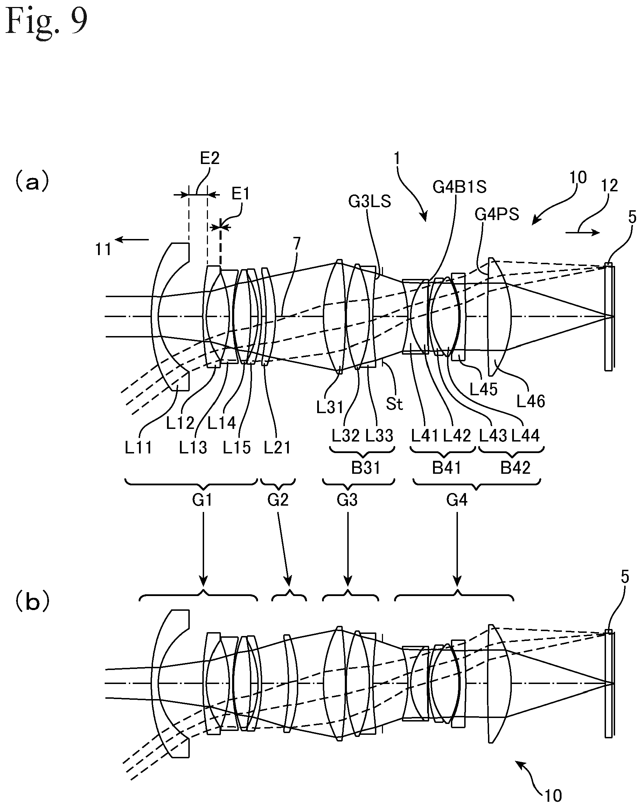

Fig. 9 depicts another example of a lens system and an image pickup apparatus, with Fig. 9(a) depicting a state where the lens system is focused at infinity and Fig. 9(b) depicting a state where the lens system is focused at a near distance.
[Fig. 10]

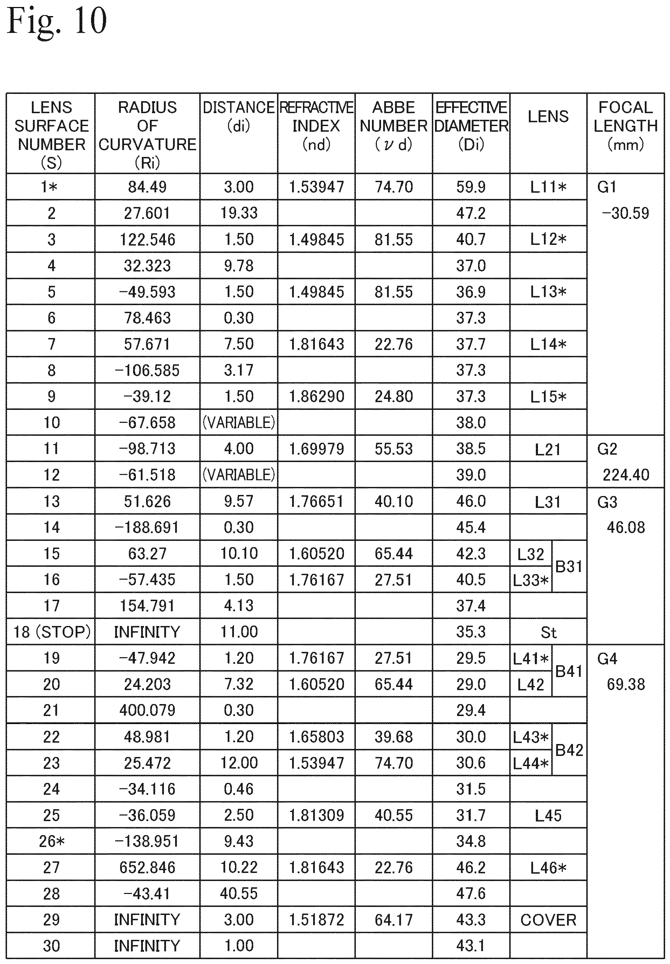

Fig. 10 depicts data on the respective lenses of the lens system depicted in Fig. 9.
[Fig. 11]

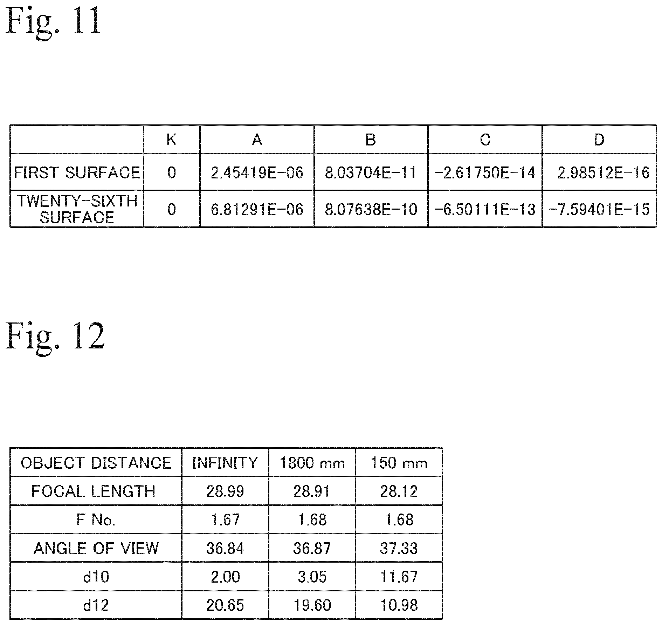

Fig. 11 depicts data on aspherical surfaces in the lens system depicted in Fig. 9.
[Fig. 12]
Fig. 12 depicts various numeric values of the lens system depicted in Fig. 9.
[Fig. 13]

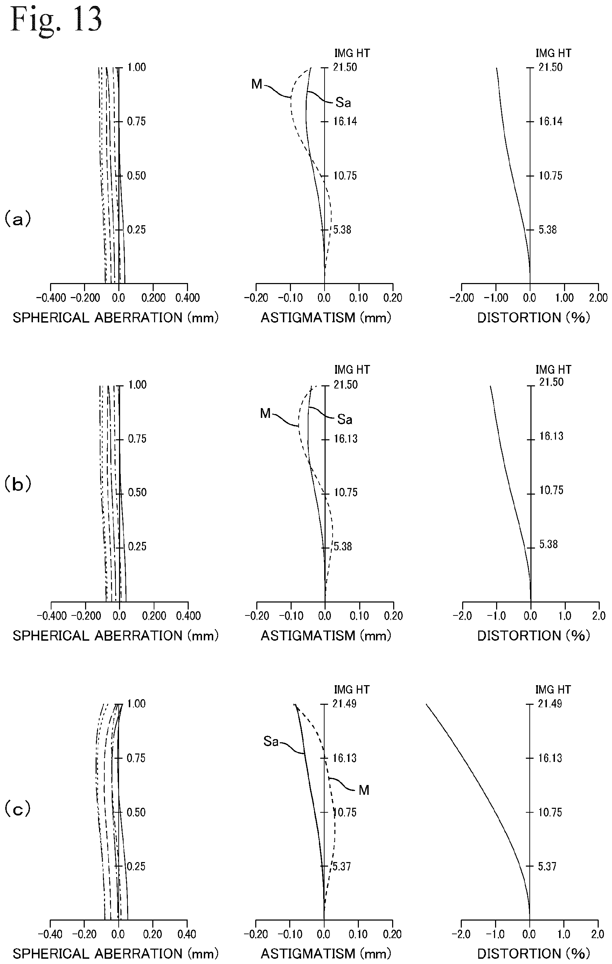

Fig. 13 depicts various aberrations of the lens system depicted in Fig. 9.
[Fig. 14]

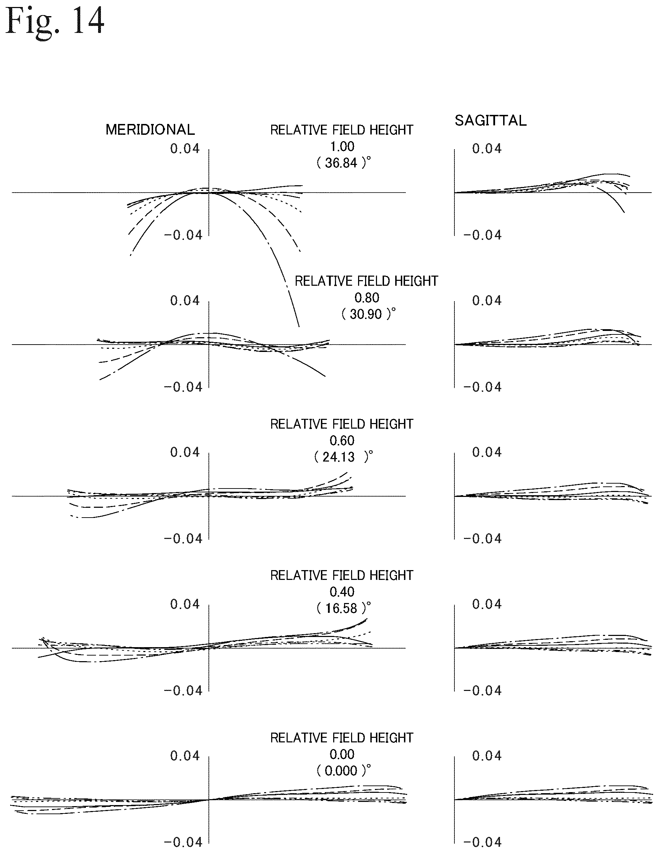

Fig. 14 depicts the transverse aberration at infinity of the lens system depicted in Fig. 9.
[Fig. 15]

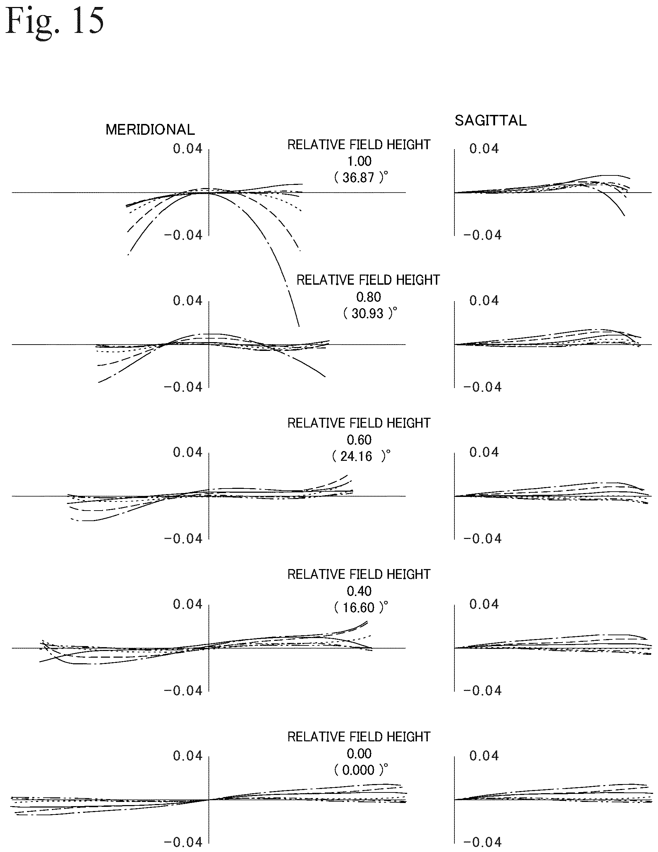

Fig. 15 depicts the transverse aberration at an intermediate distance of the lens system depicted in Fig. 9.
[Fig. 16]

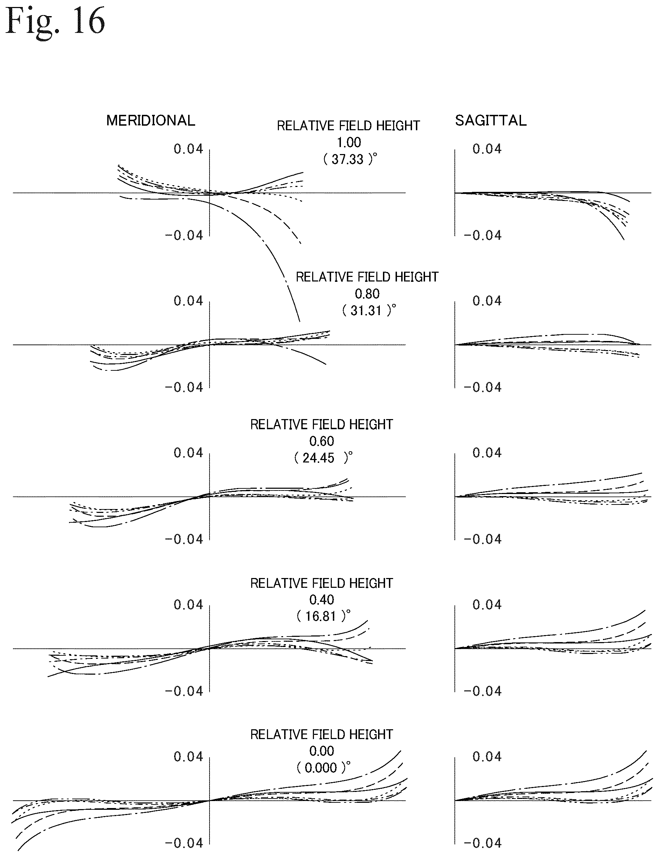

Fig. 16 depicts the transverse aberration at the nearest distance of the lens system depicted in Fig. 9.
[Fig. 17]

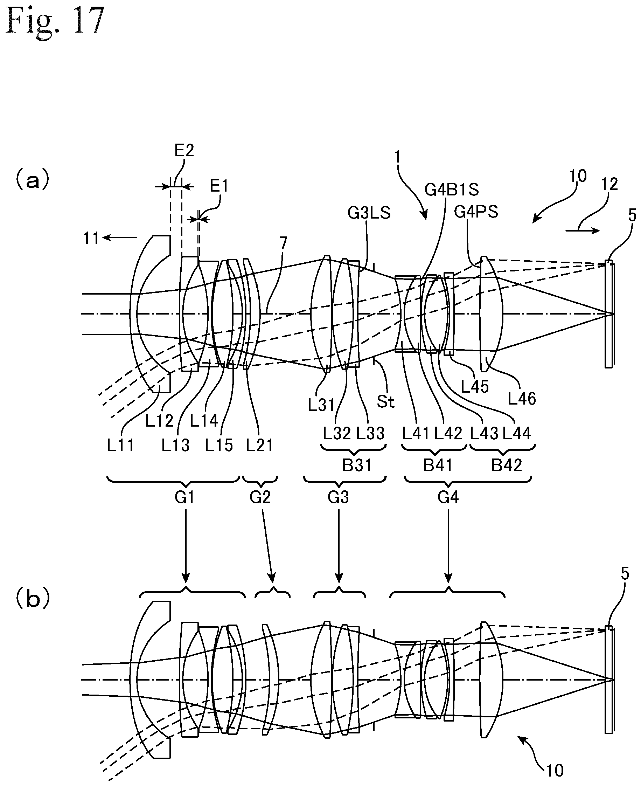

Fig. 17 depicts yet another example of a lens system and an image pickup apparatus, with Fig. 17(a) depicting a state where the lens system is focused at infinity and Fig. 17(b) depicting a state where the lens system is focused at a near distance.
[Fig. 18]

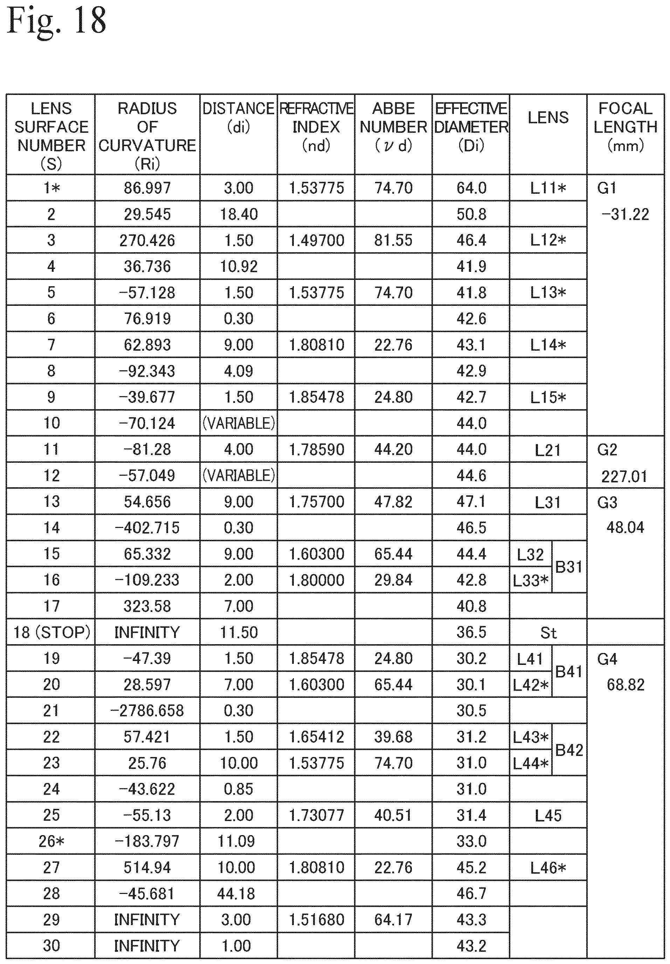

Fig. 18 depicts data on the respective lenses of the lens system depicted in Fig. 17.
[Fig. 19]

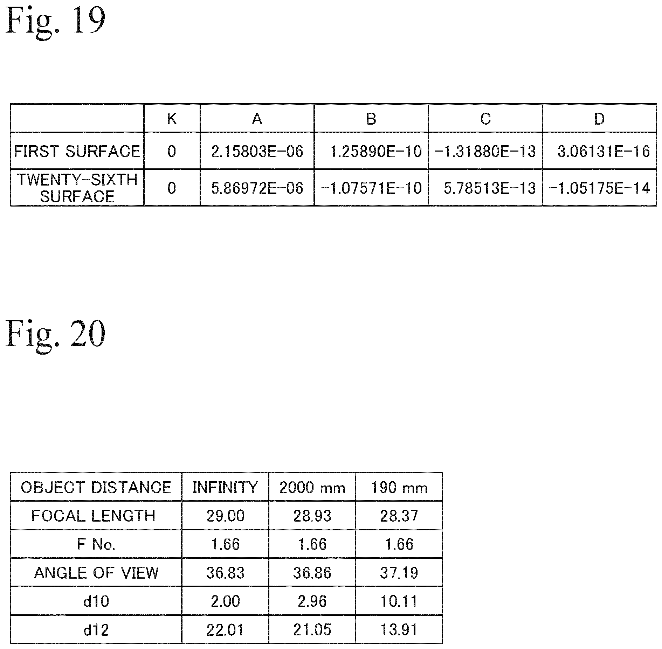

Fig. 19 depicts data on aspherical surfaces in the lens system depicted in Fig. 17.
[Fig. 20]
Fig. 20 depicts various numeric values of the lens system depicted in Fig. 17.
[Fig. 21]

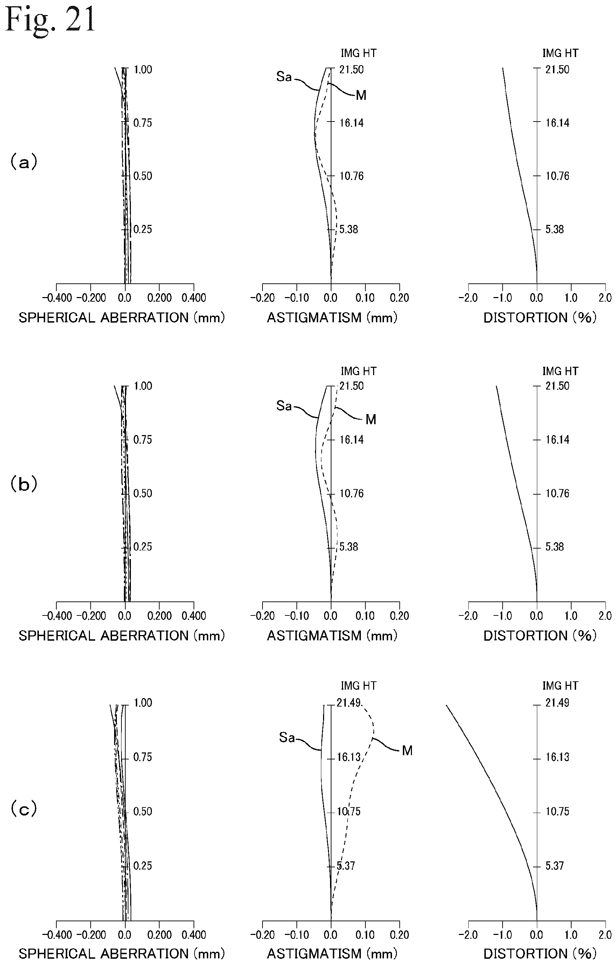

Fig. 21 depicts various aberrations of the lens system depicted in Fig. 17.
[Fig. 22]

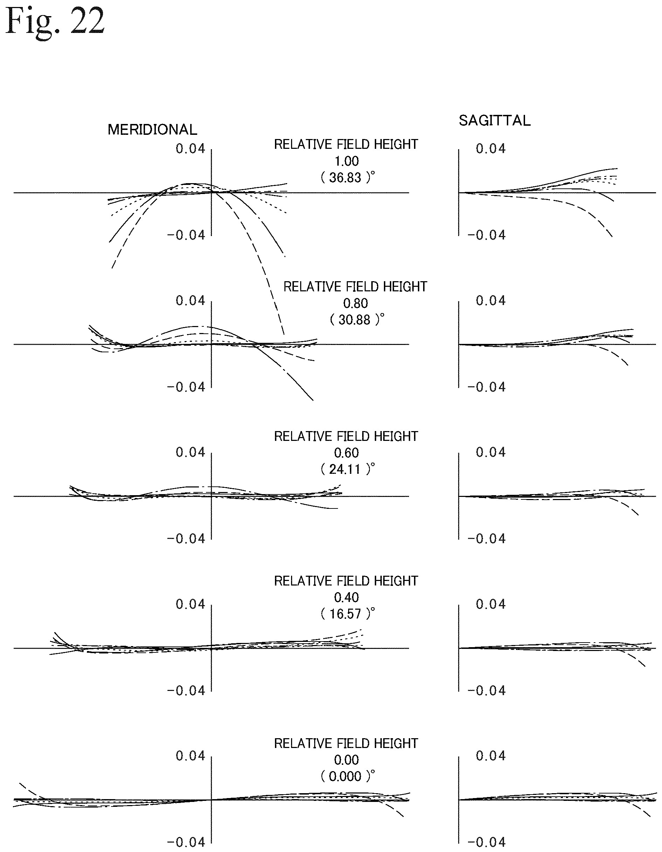

Fig. 22 depicts the transverse aberration at infinity of the lens system depicted in Fig. 17.

[Fig. 23]

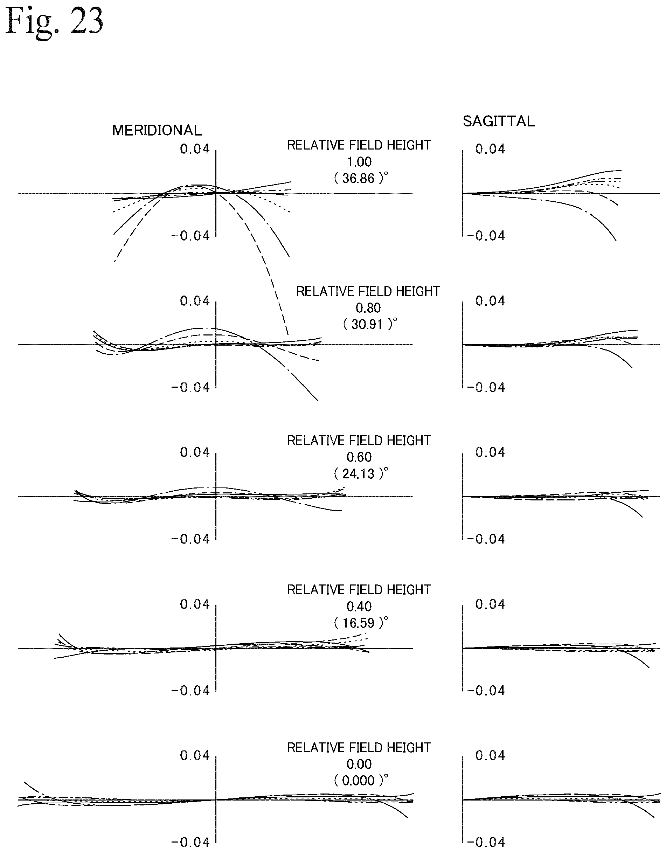

Fig. 23 depicts the transverse aberration at an intermediate distance of the lens system depicted in Fig. 17.
[Fig. 24]

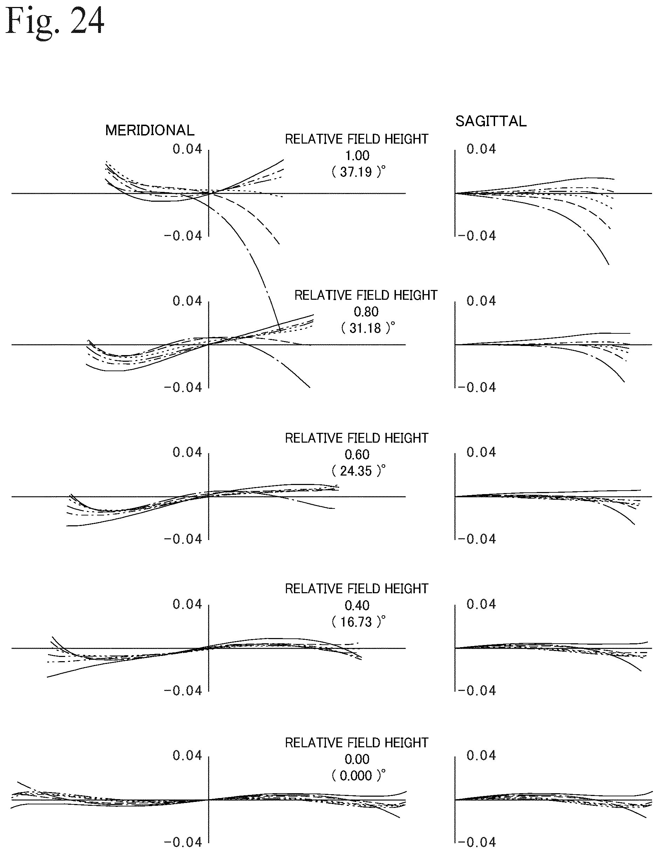

Fig. 24 depicts the transverse aberration at the nearest distance of the lens system depicted in Fig. 17.

Description of Embodiments

Fig. 1 depicts one example of an image pickup apparatus (camera, camera device) including an optical system for image pickup. Fig. 1(a) depicts a state where the system is focused at infinity, and Fig. 1(b) depicts a state where the system is focused at a near distance. The camera (image pickup apparatus, imaging device) 1 includes a lens system (optical system, image pickup optical system, image forming optical system) 10 and an image pickup element (image pickup device, image plane) 5 disposed on the image plane side (image side, image pickup side, image forming side) 12 of the lens system 10. The image pickup lens system 10 is composed, in order from the object side (subject side) 11, a first lens group G1 that has negative refractive power and is fixed during focusing, a second lens group G2 that has positive refractive power and moves during focusing, a third lens group G3 that has positive refractive power and is fixed during focusing, and a fourth lens group G4 that has positive refractive power, has a stop St disposed on the object side 11, and is fixed during focusing.

The lens system 10 is a four-group, negative-positive-positive-positive retrofocus-type lens system, is an inner-focus system where only the second lens group G2 moves along the optical axis 7 during focusing, and has the stop St disposed between the third lens group G3 and the fourth lens group G4 that are fixed. Although a retrofocus-type arrangement where the lens group G1 closest to the object side 11 has negative refractive power is suited to a wide-angle lens, since the rear group typically has a strong positive refractive power, for an inner-focus type system, there is a tendency for the magnification to change when lenses with positive refractive power move during focusing. For this reason, the lens system 10 uses a configuration where the rear group that has positive refractive power is divided into three groups to disperse the refractive power and the refractive power of the second lens group G2 that moves during focusing is suppressed, thereby making it harder for the magnification to fluctuate even when the second lens group G2 moves during focusing. In addition, by disposing the stop St between the third lens group G3 and the fourth lens group G4 that are fixed and do not move during focusing, fluctuations in the F number due to focusing are prevented. This means that it is possible to provide a lens system where the focus can be freely adjusted without having to consider fluctuations in magnification or fluctuations in brightness.

The second lens group G2 includes one meniscus-type lens L21 that has positive refractive power and is concave on the object side 11. This lens L21 may be replaced with a cemented lens. In the present embodiment, the second lens group G2 has a single-lens configuration composed of a meniscus lens L21, and this lens L21 of the second lens group G2 that moves during focusing and is closest to the first lens group G1 that has negative refractive power is a positive meniscus-type lens that has positive refractive power and is concave on the object side 11. A retrofocus-type system has a strong positive refractive power, and the Petzval sum tends to increase. In this lens system 10, increases in Petzval sum are suppressed by providing the lens L21 of the second lens group G2, which is closest to the object side 11 out of the rear group with positive refractive power, with a surface that is concave on the object side 11. This makes it possible to provide a lens system 10 capable of favorably correcting aberration, and in particular, spherical aberration and coma aberration.

In addition, by making the object-side surface of the lens L21 that faces the first lens group G1 on the object side 11 concave on the object side 11, it becomes possible for the second lens group G2, and specifically the lens L21, to move close to the first lens group G1 during focusing. That is, by disposing a concave surface on the object side 11 of the lens L21, it is possible to place the peripheral part of the lens L21 closer to the first lens group G1 so that the second lens group G2 can capture light flux, including peripheral light, that is susceptible to spreading at the first lens group G1 that has negative power and to transmit the flux to the lens groups on the image plane side 12. This means that it is possible to provide a lens system 10 that is brighter and has a low F number. Also, by disposing the second lens group that has positive refractive power close to the first lens group G1 that has negative refractive power, it is possible to suppress the spreading of the light flux and to suppress the sizes of the third lens group G3 onward on the image plane side, which means a more compact lens system 10 can be provided.

It is preferable for the combined focal length G1f of the first lens group and the combined focal length G2f of the second lens group to satisfy the following condition.

$$-0.3 \leq G1f/G2f < 0 \cdots (1)$$

By using a three-group configuration for the rear group with positive refractive power in a retrofocus type arrangement, the refractive power of the second lens group G2 that is moved during focusing is suppressed to within the range of Condition (1) given above, and by doing so, it is possible to suppress fluctuations in magnification and also fluctuations in the angle of view during focusing. As described above, in the lens system 10, fluctuations in the F number during focusing are also suppressed. Accordingly, it is possible to provide an image pickup apparatus (imaging device, camera) 1 which has little fluctuations in brightness, magnification, and angle of view due to focusing and makes it easy to freely adjust the focus during shooting or recording of video and movies.

The first lens group G1 includes the negative first meniscus lens L11 that is convex on the object side 11 and is disposed closest to (the most of) the object side 11, a biconcave negative lens L12, and a negative second meniscus lens L13 that is convex on the object side 11. A configuration where the negative meniscus lens L11 that is convex on the object side 11 is disposed closest to the object side 11 and the negative meniscus lens L13 that is convex on the object side 11 in the same way is disposed on the image plane side 12 is suited to the lens system 10 that has a wide field of view and produces bright images. On the other hand, since surfaces that are convex on the object side 11 come after one another, the Petzval sum tends to increase, which makes it difficult to correct aberration. For this reason, by disposing the biconcave negative lens L12 in the middle, it is possible to introduce a surface that is concave on the object side 11, which makes it possible to suppress the increase in the Petzval sum. The biconcave negative lens may be disposed adjacent to a configuration with adjacent negative meniscus lenses that are convex on the object side 11. That is, the second meniscus lens L13 and the biconcave negative lens L12 are disposed adjacently and may be interchanged so that either one of these lenses is closest to the object side 11. In either case, an effect of suppressing increases in the Petzval sum is obtained.

On the other hand, as depicted in Fig. 1, although the combination of the negative meniscus lens (first meniscus lens) L11 that is convex on the object side 11, a biconcave negative lens L12, and a negative meniscus lens (or "second meniscus lens") L13 that is convex on the object side 11 is a combination of lenses with negative refractive power, since the directions of curvature of the adjacent surfaces of the two lenses L11 and L12 that are closest to the object side 11 are different, it is possible to effectively correct axial chromatic aberration. In addition, it is possible to suppress the difference between the sagittal image plane and the meridional image plane.

Also, in the combination of the first meniscus lens L11, the negative lens L12, and the second meniscus lens L13, it is desirable for the object side 11 surface of the negative lens L12 (a surface that is concave on the object side) to be disposed as close as possible to the image plane side 12 surface (a surface that is convex on the object side) of the other lens disposed on the object side 11 of the object side surface of the negative lens L12. In the present embodiment, it is desirable for these surfaces to be close to each other so that the distance between the image plane side 12 surface of the first meniscus lens L11 on the object side 11 and the object side 11 surface of the negative lens L12 to be shorter than the distance between the image plane side 12 surface of the negative lens L12 and the object side surface of the second meniscus lens L13. By using a configuration that is a combination of lenses with negative refractive power and has surfaces that are convex and concave on the object side 11 disposed close to and facing each other, it is possible to have light flux pass the two surfaces that have different orientations at substantially the same position (height) from the optical axis without a large change in the spreading of the light flux. In the wide-angle lens system 10, the curvature of the lens on the object side 11 is typically small, which tends to cause aberration. However, by placing symmetrical surfaces facing each other and having light pass through parts with similar curvature, it is possible to cancel out or suppress the aberration that occurs. This configuration is suited to effectively correcting axial chromatic aberration, and is capable of suppressing differences between the sagittal image plane and the meridional image plane.

In more detail, it is preferable for a first distance E1 along the optical axis between an edge of an object side 11 surface of the negative lens L12 and an edge of an image plane side 12 surface of the first meniscus lens L11 or the second meniscus lens L13 (in the present embodiment, the first meniscus lens L11) disposed on the object side 11 of the negative lens L12 and a second distance E2 along the optical axis between an edge of an object side 11 surface of the second meniscus lens L13 and an edge of an image plane side 12 surface of the first meniscus lens L11 or the negative lens L12 (in the present embodiment, the negative lens L12) disposed on the object side 11 of the second meniscus lens L13 to satisfy the following condition.

$$E1 < E2 \quad \cdots \quad (2)$$

In many cases, the lenses are disposed so that the first distance E1 is a minimum air gap or the edges of the lenses are in contact, so that the first distance E1 is a minimum air gap or zero.

The third lens group G3 includes, in order from the object side 11, a lens L31 that has positive refractive power and a cemented lens B31 that has positive refractive power and is composed of a lens L32 with positive refractive power and a lens L33 with negative refractive power. In a retrofocus-type configuration, although a strong positive refractive power is provided in the rear group, chromatic aberration can be improved by providing the cemented lens B31 that has positive refractive power in the third lens group. In addition, by disposing the positive lens L31 on the object side 11 and using a configuration where the positive lenses L31 and L32 are aligned from the object side 11, it is possible to disperse the surfaces with positive power and thereby possible to suppress sharp bending of the light flux. Accordingly, this configuration is suited to improving spherical aberration.

The surface G3LS on the image plane side 12 of the cemented lens B31 in the third lens group G3 (the surface S17 in Fig. 2 described below) is adjacent to the stop St, and the half spherical ratio, that is, the ratio between the effective radius G3LSH of this surface and the radius of curvature G3LSr may satisfy the following Condition (3).

$$0 < |G3LSH/G3LSr| \le 0.2 \cdots (3)$$

Although astigmatism and coma aberration, and especially coma aberration, are improved by making the stop St narrow, since the amount of light passing through the stop St decreases, it becomes difficult to achieve a bright lens system 10. By making the surface G3LS arranged on the object side 11 of the stop St a surface that is close to flat so as to satisfy the Condition (3) above, it is possible to suppress the dispersion of light flux at the surface immediately before the stop St. This means that a bright lens system 10 with little coma aberration can be obtained. On the other hand, although making the surface G3LS close to a flat surface makes it difficult to achieve refractive power as a lens, it is possible to achieve a predetermined power as the third lens group G3 by configuring the third lens group G3 as a combination of the positive lens L31 and the positive cemented lens B31 as described earlier and distributing the positive refractive power to the object side 11 surfaces. The upper limit of Condition (3) may be 0.1, or may be 0.06.

The fourth lens group G4 includes, in order from the object side 11, a first cemented lens B41 composed of a lens L41 with negative refractive power and a lens L42 with positive refractive power, a second cemented lens (next cemented lens) B42 composed of a lens L43 with negative refractive power and a lens L44 with positive refractive power, a negative meniscus lens L45 that is concave on the object side, and a lens L46 with positive refractive power. The fourth lens group G4 as a whole is a combination of negative-positive-negative-positive-negative-positive lenses from the object side 11, so that axial chromatic aberration can be easily corrected. In addition, by providing independent surfaces through the use of single lenses as the two lenses on the image plane side 12, it is easy to correct other aberrations, including chromatic aberration of magnification.

In addition, the fourth lens group G4 has a negative-positive configuration (the cemented lens B41), which is a symmetrical arrangement of powers compared to the third lens group G3 on the other side of the stop St that has a positive-negative configuration (the cemented lens B31). This is favorable for aberration correction. That is, a configuration where the third lens group G3 includes the cemented lens B31 that is disposed adjacent to the object side of the stop St and includes, from the object side 11, a lens L32 with positive refractive power and a lens L33 with negative refractive power and the fourth lens group G4 includes the cemented lens B41 that is disposed adjacent to the image side of the stop St and includes, from the object side 11, a lens L41 with negative refractive power and a lens L42 with positive refractive power, has high symmetry on both sides of the stop St, making it a configuration where it is easy to favorably correct aberration.

In the lens system 10, the third lens group G3 includes, from the object side 11, the lens L31 with positive refractive power and the positive-negative cemented lens B31, and the fourth lens group G4, which is on the other side of the stop St, includes, from the object side 11, the negative-positive cemented lenses B41 and B42, the lens L45 with negative refractive power, and the lens L46 with positive refractive power. Accordingly, the lens arrangement of the third lens group G3 and the fourth lens group G4 disposed with the stop St in between have highly symmetrical refractive powers, making this a configuration suited to aberration correction.

In addition, the half spherical ratio of the surface G4B1S (S21 in the surfaces listed in Fig. 2 described below) on the image plane side 12 of the first cemented lens B41 of the fourth lens group G4, which is the ratio between the effective radius G4B1SH and the radius of curvature G4B1Sr of the surface G4B1S may satisfy the following Condition (4).

$$0.005 \le |G4B1SH/G4B1Sr| \le 0.4 \cdots (4)$$

This surface G4B1S is an image plane side 12 surface that is closest to the stop St among the image plane side surfaces on the image plane side 12 of the stop St, and although a certain degree of curvature is necessary for aberration correction, if the curvature is large, aberration correction becomes difficult. Accordingly, the range of Condition (4) is suited to correction of coma aberration and chromatic aberration of magnification. The lower limit of Condition (4) may be 0.001, or may be 0.1. The upper limit of Condition (4) may be 0.25, or may be 0.2.

The cemented surfaces of the cemented lenses B41 and B42 of the fourth lens group G4 are preferably both convex on the object side 11, and preferably symmetrical with the cemented surface of the cemented lens B31 of the third lens group G3 (which is concave on the object side 11). This means the cemented surfaces are disposed symmetrically with respect to the stop St, which is a configuration suited to aberration correction.

In addition, the half spherical ratio of the surface G4PS (S27 in the surfaces listed in Fig. 2 described below), which is the ratio between the effective radius G4PSH and the radius of curvature G4PSr of the surface G4PS on the object side 11 of the lens L46 with positive refractive power that is closest to (the most of) the image plane side 12 of the fourth lens group G4, may satisfy the following Condition (5).

$$0 < |G4PSH/G4PSr| \leq 0.2 \cdots (5)$$

The lens L46 with positive refractive power that is closest to the image plane side 12 of the fourth lens group G4 is an image forming lens that is the closest to (the most of) the image plane side 12 out of the entire lens system 10 and performs a function of collecting the light flux dispersed by the lenses positioned closer to the object side 11. In the fourth lens group G4, two cemented lenses B41 and B42 are disposed on the object side 11, and a negative meniscus lens L45 is disposed following these lenses. To gather the light flux for which aberration has been corrected by these lenses and form an image, the lens L46 that is close to plano-convex is more suited to the final correction of aberration than a positive biconvex lens that is convex on both surfaces and tends to cause aberration. The upper limit of Condition (5) may be 0.1 or may be 0.05.

A more detailed description will now be given with reference to the drawings. Fig. 1 depicts the lens arrangement of the lens system 10 in different states. Fig. 1(a) depicts the lens arrangement when the focus position is at infinity, and Fig. 1(b) depicts the lens arrangement when the focus position is the nearest distance (shortest distance, 145 mm).

The lens system 10 is a wide-angle lens with a focal length of 29 mm at infinity, and has a suitable configuration for an interchangeable lens of the camera 1 used for recording (image pickup) of movies or video. The lens system 10 has a four-group configuration. The lens system 10 consists of, in order from the object side 11, the first lens group G1 with overall negative refractive power, the second lens group G2 with overall positive refractive power, the third lens group G3 with overall positive refractive power, the stop St, and the fourth lens group G4 with overall positive refractive power. The first lens group G1, the third lens group G3, and the fourth lens group G4 are fixed lens groups that do not move, so that the distance from the image plane 5 does not change during focusing. When the focus position moves from infinity to the near distance during focusing, the second lens group G2 monotonously moves toward the image plane side 12.

Fig. 2 depicts data on the respective lenses that construct the lens system 10. The radius of curvature (Ri) is the radius of curvature (in mm) of each surface of each lens disposed in order from the object side 11, the distance di is the distance (in mm) between the respective lens surfaces, the effective diameter (Di) is the effective diameter of each lens surface (or "diameter" in mm), the refractive index nd is the refractive index (d-line) of each lens, and the Abbe number vd is the Abbe number (d-line) of each lens. In Fig. 2, the surfaces that have a surface number marked with an asterisk are aspherical surfaces, and the lenses whose lens names have been marked with an asterisk are lenses that use anomalous dispersion glass. The same applies to the embodiments described later.

Fig. 3 depicts coefficients of the aspherical surfaces included in the lens system 10. In this example, the surface S1 on the object side 11 of the lens L11 closest to the object side 11 of the first lens group G1 and the surface S26 on the image plane side of the lens L45 of the fourth lens group G4 are aspherical. In view of this system being an interchangeable lens, it is desirable for the aspherical surfaces to be surfaces located inside the lens system 10. On the other hand, the surface S1 on the object side 11 of the lens L11 positioned closest to the object side 11 has the largest effective diameter, which means that asphericalization has a large effect. Accordingly, this surface is suited to stably and favorably correcting aberration.

When X is the coordinate in the optical axis direction, Y is the coordinate in the direction perpendicular to the optical axis, the direction in which light propagates is positive, and R is the paraxial radius of curvature, the aspherical surfaces are expressed by the following equation (X) using the coefficients K, A, B, C and D depicted in Fig. 3. The same also applies to the following embodiments. Note that "En" means "10 to the nth power".

$$X = (1/R)Y^2/[1+\{1-(1+K)(1/R)^2Y^2\}^{1/2}]+AY^4+BY^6+CY^8+DY^{10} \cdots (X)$$

Fig. 4 depicts the values of the focal distance f, the F No., the angle of view, and the variable distances d10 and d12 in the lens system 10 when the focal length of the lens system 10 is at infinity, at an intermediate position (1800 mm), and at the nearest distance (shortest position, 145 mm).

Fig. 5 depicts spherical aberration, astigmatism, and distortion for when the focal length of the lens system 10 is at infinity (Fig. 5(a)), at an intermediate position (1800 mm) (Fig. 5(b)), and at the shortest position (nearest distance, 145 mm) (Fig. 5(c)). Fig. 6 depicts the transverse aberration at infinity. Fig. 7 depicts the transverse aberration at an intermediate position (1800 mm), and Fig. 8 depicts the transverse aberration at the shortest position (nearest distance, 145 mm). Spherical aberration is shown for the wavelengths of 404.6560 nm (dot-dash line), 435.8340 nm (dashed line), 486.1330 nm (dotted line, short dashed line), 546.0740 nm (dot-dot-dash line), 587.5620 nm (short dot-dash line), and 656.2720 nm (solid line). Astigmatism is depicted for meridional (tangential) rays M and sagittal rays Sa. The same applies to the aberration diagrams described later.

The lens system 10 depicted in these drawings is composed of a total of 15 lenses (L11 to L15, L21, L31 to L33, and L41 to L46). The first lens group G1 disposed closest to the object side 11 (the most of the object side 11) has a five-lens configuration that includes, in order from the object side 11, a meniscus lens (first meniscus lens) L11 that has negative refractive power and is convex on the object side 11, the biconcave negative lens L12, the meniscus lens (second meniscus lens) L13 that has negative refractive power and is convex on the object side 11, a biconvex positive lens L14, and a meniscus lens L15 that has negative refractive power and is concave on the object side 11.

The second lens group G2, which is the focusing lens group, has a single-lens configuration composed of the positive meniscus lens L21 that is concave on the object side 11.

The third lens group G3 is composed, in order from the object side 11, of the biconvex positive lens L31 and a cemented lens B31 composed of the biconvex positive lens L32 and the negative meniscus lens L33 that is concave on the object side 11.

The fourth lens group G4, which is disposed on the image plane side 12 of the third lens group G3 with the stop St in between and is closest to the image plane side 12 (the most of the image plane side 12), is composed of the cemented lens B41, which is made up of the biconcave negative lens L41 and the positive meniscus lens L42 that is convex on the object side 11, the cemented lens B42 that is composed of a negative meniscus lens L43 that is convex on the object side 11 and a biconvex positive lens L44, the negative meniscus lens L45 that is concave on the object side 11, and the positive meniscus lens L46 that is concave on the object side 11.

The lens system 10 depicted in Fig. 1 includes all of the configurations described above, and the values of the respective conditions are as follows.

$$\text{Condition (1)  (G1f/G2f): -0.12}$$

$$\text{Condition (2) (E1<E2): (0.4/13.9)}$$

$$\text{Condition (3) (|G3LSH/G3LSr| (|D17/2/R17|)): 0.02}$$

$$\text{Condition (4) (|G4B1SH/G4B1Sr| (|D21/2/R21|)): 0.121}$$

$$\text{Condition (5) (|G4PSH/G4PSr| (D27/2/R27)): 0.031}$$

The lens system 10 depicted in Fig. 1 satisfies all of Conditions (1) to (5), and is a lens system that has a focal length of 29 mm, is wide angle with an angle of view of 36.8 degrees, and is extremely bright with an F number of 1.69. In addition, with the lens system 10, when focusing from infinity to the near distance, the F number is fixed, the focal length and the angle of view hardly change, and there are hardly any fluctuations in magnification, which means that it is possible to easily perform focusing and obtain images that are sharp and have little fluctuations in brightness at the desired focal position. In addition, as depicted in Figs. 5 to 8, it is possible to acquire images in which various aberrations are favorably corrected across the entire focusing range.

Fig. 9 depicts a different lens system 10. Fig. 9(a) depicts the lens arrangement when the focus position is at infinity, and Fig. 9(b) depicts the lens arrangement when the focus position is the shortest position (nearest distance, 150 mm). This lens system 10 is also composed of a total of 15 lenses (L11 to L15, L21, L31 to L33, and L41 to L46), and includes, in order from the object side 11, a first lens group G1 that is fixed during focusing and has negative refractive power, a second lens group G2 that has positive refractive power and moves during focusing, a third lens group G3 that has positive refractive power and is fixed during focusing, and a fourth lens group G4 that has a stop St disposed on the object side 11, has positive refractive power, and is fixed during focusing.

Accordingly, this lens system 10 is also a retrofocus type with a negative-positive-positive-positive four-group configuration, and is an inner-focus system where only the second lens group G2 moves along the optical axis 7 during focusing. In addition, the lens system also has the stop St disposed between the third lens group G3 and the fourth lens group G4 that are fixed. The second lens group G2 has a single lens configuration composed of a positive meniscus lens L21 that is concave on the object side 11, and moves monotonously from the object side 11 to the image plane side 12 when focusing from infinity to a near distance.

Fig. 10 depicts data on each lens that configures the lens system 10. Fig. 11 depicts coefficients of the aspherical surfaces included in the lens system 10. Fig. 12 depicts the focal length f, the F number (F No.), the angle of view, and the values of the variable distances d10 and d12 of the lens system 10 when the focal length of the lens system 10 is at infinity, at an intermediate position (1800 mm), and at the nearest distance (150 mm). Fig. 13 depicts spherical aberration, astigmatism, and distortion when the focal length of the lens system 10 is at infinity (Fig. 13(a)), at an intermediate position (1800 mm) (Fig. 13(b)), and at the nearest distance (150 mm) (Fig. 13(c)). Figs. 14 to 16 depict transverse aberration at infinity, at an intermediate position (1800 mm), and at the nearest distance (150 mm).

In the lens system 10, the first lens group G1 that is closest to the object side has a five-lens configuration that includes, in order from the object side 11, a meniscus lens (first meniscus lens) L11 that has negative refractive power and is convex on the object side 11, a meniscus lens (second meniscus lens) L12 that has negative refractive power and is convex on the object side 11, a biconcave negative lens L13, a biconvex positive lens L14, and a meniscus lens L15 that has negative refractive power and is concave on the object side 11. In this configuration, the second meniscus lens and the negative lens are interchanged, so that the first distance E1 is the distance along the optical axis 7 between the edge of the image plane side 12 surface of the second meniscus lens L12 and the edge of the object side surface of the negative lens L13 and the second distance E2 is the distance between the edge of the image plane side 12 surface of the first meniscus lens L11 and the object side 11 surface of the second meniscus lens L12. The rest of the configuration of the first lens group G1 and the configurations of the other lens groups G2 to G4 are the same as in the lens system 10 depicted in Fig. 1.

The values of the respective conditions of the lens system 10 depicted in Fig. 9 are as follows.

Condition (1) (G1f/G2f): -0.136

Condition (2) (E1<E2): (0.41/7.75)

Condition (3) (|G3LSH/G3LSr|(|D17/2/R17|)): 0.12

Condition (4) (|G4B1SH/G4B1Sr|(|D21/2/R21|)): 0.036

Condition (5) (|G4PSH/G4PSr|(D27/2/R27)): 0.035

The lens system 10 depicted in Fig. 9 also satisfies all of Conditions (1) to (5) and is a lens system that has a focal length of 29 mm, is wide angle with an angle of view of 36.8 degrees, and is extremely bright with an F number of 1.68. In addition, in the lens system 10, when focusing from infinity to the near distance, the F number is fixed, the focal length and the angle of view hardly change, and there are hardly any fluctuations in magnification, which means that it is possible to easily perform focusing and obtain images that are sharp and have little fluctuations in brightness at the desired focal position. In addition, as depicted in Figs. 13 to 16, it is possible to acquire images in which various aberrations are favorably corrected across the entire focusing range.

Fig. 17 depicts yet another lens system 10. Fig. 17(a) depicts the lens arrangement when the focus position is at infinity, and Fig. 17(b) depicts the lens arrangement when the focus position is the nearest distance (190 mm). This lens system 10 is also composed of a total of 15 lenses (L11 to L15, L21, L31 to L33, and L41 to L46), and includes, in order from the object side 11, a first lens group G1 that has negative refractive power and is fixed during focusing, a second lens group G2 that has positive refractive power and moves during focusing, a third lens group G3 that has positive refractive power and is fixed during focusing, and a fourth lens group G4 that has a stop St disposed on the object side 11, has positive refractive power, and is fixed during focusing.

Accordingly, this lens system 10 is also a retrofocus type with a negative-positive-positive-positive four-group configuration, and is an inner-focus system where only the second lens group G2 moves along the optical axis 7 during focusing. In addition, the lens system has the stop St disposed between the third lens group G3 and the fourth lens group G4 that are fixed. The second lens group G2 has a single-lens configuration composed of a positive meniscus lens L21 that is concave on the object side 11 and moves monotonously from the object side 11 to the image plane side 12 when focusing from infinity to a near distance.

Fig. 18 depicts data on each lens that constructs the lens system 10. Fig. 19 depicts coefficients of the aspherical surfaces included in the lens system 10. Fig. 20 depicts the focal length f, the F number (F No.), the angle of view, and the values of the variable distances d10 and d12 of the lens system 10 when the focal length of the lens system 10 is at infinity, at an intermediate position (2000 mm), and at the nearest distance (190 mm). Fig. 21 depicts spherical aberration, astigmatism, and distortion when the focal length of the lens system 10 is at infinity (Fig. 21(a)), at an intermediate position (2000 mm) (Fig. 21(b)), and at the nearest distance (190 mm) (Fig. 21(c)). Figs. 22 to 24 depict transverse aberration at infinity, at an intermediate position (2000 mm), and at the nearest distance (190 mm).

In this lens system 10, the first lens group G1 closest to the object side is the same as the lens system 10 depicted in Fig. 9, and the rest of the configuration of the first lens group G1 and the configurations of the other lens groups G2 to G4 are the same as the lens system 10 depicted in Fig. 1.

The values of the respective conditions of the lens system 10 depicted in Fig. 17 are as follows.

$$\text{Condition (1) (G1f/G2f): -0.14}$$

$$\text{Condition (2) (E1<E2): (0.40/4.97)}$$

$$\text{Condition (3) (|G3LSH/G3LSr|(|D17/2/R17|)): 0.06}$$

$$\text{Condition (4) (|G4B1SH/G4B1Sr|(|D21/2/R21|)): 0.0054}$$

$$\text{Condition (5) (|G4PSH/G4PSr|(D27/2/R27)): 0.043}$$

The lens system 10 depicted in Fig. 17 satisfies Conditions (1) to (3) and (5). Regarding Condition (4), the surface S21 on the image plane side 12 of the cemented lens B41 is too close to flat, resulting in a tendency for the aberration correction performance to be somewhat insufficient. However, aberrations such as coma aberration are corrected to a favorable range by disposing more anomalous dispersion lenses at important positions, such as both lenses that construct the cemented lens B42. This lens system 10 is also a lens system that has a focal length of 29 mm, is wide angle with an angle of view of 36.8 degrees, and is extremely bright with an F number of 1.66. In addition, with the lens system 10, when focusing from infinity to the near distance, the F number is fixed, the focal length and the angle of view hardly change, and there are hardly any fluctuations in magnification, which means that it is possible to easily perform focusing and obtain images that are sharp and have little fluctuations in brightness at the desired focal position. In addition, as depicted in Figs. 21 to 25, it is possible to acquire images in which various aberrations are favorably corrected across the entire focusing range.

**Claims**

1.  A lens system for image pickup comprising, in order from an object side:

    a first lens group that has negative refractive power and is fixed during focusing;
    a second lens group that has positive refractive power and moves during focusing;
    a third lens group that has positive refractive power and is fixed during focusing; and
    a fourth lens group that has a stop disposed on the object side, is fixed during focusing, has positive refractive power, and is disposed closest to an image plane side.

2.  The lens system according to claim 1,
    wherein the second lens group includes a meniscus-type lens with positive refractive power that is concave on the object side.

3.  The lens system according to claim 2,

wherein the meniscus-type lens with positive refractive power is composed of a single lens or a cemented lens.

4. The lens system according to any one of claims 1 to 3,
   wherein a combined focal length G1f of the first lens group and a combined focal length G2f of the second lens group satisfy a following condition.

$$-0.3 \leq G1f/G2f < 0$$

5. The lens system according to any one of claims 1 to 4, wherein the third lens group includes, in order from the object side, at least one lens with positive refractive power and a cemented lens composed of a lens with positive refractive power and a lens with negative refractive power.

6. The lens system according to claim 5,
   wherein a surface on an image plane side of the cemented lens of the third lens group is adjacent to the stop and an effective radius G3LSH and a radius of curvature G3LSr of the surface satisfy a following condition.

$$0 < |G3LSH/G3LSr| \leq 0.2$$

7. The lens system according to any one of claims 1 to 6,
   wherein the fourth lens group includes, in order from the object side, a first cemented lens composed of a lens with negative refractive power and a lens with positive refractive power, a second cemented lens composed of a lens with negative refractive power and a lens with positive refractive power, a negative meniscus lens that is concave on the object side, and a lens with positive refractive power.

8. The lens system according to claim 7,
   wherein an effective diameter G4B1SH and a radius of curvature G4B1Sr of a surface on an image plane side of the first cemented lens of the fourth lens group satisfy a condition below.

$$0.005 \leq |G4B1SH/G4B1Sr| \leq 0.4$$

9. The lens system according to claim 7 or 8,
   wherein an effective diameter G4PSH and a radius of curvature G4PSr of a surface on the object side of the lens with positive refractive power in the fourth lens group satisfy a condition below.

$$0 < |G4PSH/G4PSr| \leq 0.2$$

10. The lens system according to one of claims 1 to 4,
    wherein the third lens group includes a cemented lens that is disposed adjacent to the stop and is composed, in order from the object side, of a lens with positive refractive power and a lens with negative refractive power, and the fourth lens group includes a first cemented lens that is disposed adjacent to the stop and is composed, in order from the object side, of a lens with negative refractive power and a lens with positive refractive power.

11. The lens system according to claim 10,
    wherein the third lens group includes, in order from the object side, at least one lens with positive refractive power and a cemented lens.

12. The lens system according to claim 10 or 11,
    wherein the fourth lens group includes, in order from the object side, the first cemented lens, a second cemented lens which is composed of a lens with negative refractive power and a lens with positive refractive power, a meniscus lens that is concave on the object side, and a lens with positive refractive power.

13. The lens system according to any one of claims 10 to 12,
    wherein an effective diameter G3LSH and a radius of curvature G3LSr of a surface on an image plane side of the cemented lens of the third lens group and an effective diameter G4B1SH and a radius of curvature G4B1Sr of a surface on the image plane side of the first cemented lens of the fourth lens group satisfy following conditions.

$$0 < |G3LSH/G3LSr| \leq 0.2$$

$$0.005 \leq |G4B1SH/G4B1Sr| \leq 0.4$$

14. The lens system according to any one of claims 9 to 13,
    wherein a cemented surface of the first cemented lens of the fourth lens group is convex on the object side.

15. The lens system according to any one of claims 1 to 14,
    wherein the first lens group includes a first negative meniscus lens that is disposed closest to the object side and is convex on the object side, a second negative meniscus lens that is convex on the object side, and a negative biconcave lens, and
    the second meniscus lens and the negative lens are adjacently disposed so that the second meniscus lens or the negative lens is positioned on the object side.

16. The lens system according to claim 15,
    wherein a first distance E1 along an optical axis between an edge of an object side surface of the negative lens and an edge of an image plane side surface of the first meniscus lens or the second meniscus lens disposed on the object side of the negative lens and a second distance E2 along the optical axis between an edge of an object side surface of the second meniscus lens and an edge of an image plane side surface of the first meniscus lens or the negative lens disposed on the object side of the second meniscus lens satisfy a following condition.

$$E1 < E2$$

17. An image pickup apparatus comprising:

    a lens system according to any one of claims 1 to 16; and
    an image pickup element disposed on an image plane side of the lens system.

# Fig. 1

(a)

(b)

# Fig. 2

| LENS SURFACE NUMBER (S) | RADIUS OF CURVATURE (Ri) | DISTANCE (di) | REFRACTIVE INDEX (nd) | ABBE NUMBER ($\nu$ d) | EFFECTIVE DIAMETER (Di) | LENS | | FOCAL LENGTH (mm) |
|---|---|---|---|---|---|---|---|---|
| 1* | 74.795 | 3.00 | 1.53947 | 74.70 | 60.0 | L11* | | G1 |
| 2 | 26.455 | 17.06 | | | 46.9 | | | −29.70 |
| 3 | −109.975 | 1.50 | 1.49845 | 81.55 | 46.6 | L12* | | |
| 4 | 50.209 | 18.56 | | | 43.5 | | | |
| 5 | 766.776 | 1.50 | 1.49845 | 81.55 | 42.6 | L13* | | |
| 6 | 55.252 | 0.30 | | | 42.3 | | | |
| 7 | 51.536 | 8.00 | 1.81643 | 22.76 | 42.5 | L14* | | |
| 8 | −300.868 | 3.72 | | | 41.9 | | | |
| 9 | −52.474 | 1.50 | 1.64419 | 34.47 | 41.9 | L15 | | |
| 10 | −677.925 | (VARIABLE) | | | 42.1 | | | |
| 11 | −109.841 | 4.00 | 1.65425 | 58.55 | 43.4 | L21 | | G2 |
| 12 | −67.342 | (VARIABLE) | | | 44.0 | | | 257.54 |
| 13 | 54.537 | 9.19 | 1.69661 | 53.21 | 47.0 | L31 | | G3 |
| 14 | −252.109 | 0.30 | | | 46.5 | | | 44.40 |
| 15 | 57.452 | 11.03 | 1.53947 | 74.70 | 44.2 | L32* | B31 | |
| 16 | −61.463 | 1.50 | 1.70442 | 30.13 | 42.7 | L33 | | |
| 17 | −933.361 | 12.95 | | | 40.6 | | | |
| 18 (STOP) | INFINITY | 5.06 | | | 30.6 | St | | |
| 19 | −49.589 | 1.20 | 1.80633 | 29.84 | 28.3 | L41* | B41 | G4 |
| 20 | 19.178 | 8.00 | 1.73234 | 54.68 | 27.3 | L42 | | 66.29 |
| 21 | 113.63 | 0.30 | | | 27.6 | | | |
| 22 | 50.988 | 1.20 | 1.67157 | 33.05 | 28.0 | L43 | B42 | |
| 23 | 21.923 | 13.08 | 1.59732 | 67.74 | 28.6 | L44* | | |
| 24 | −30.588 | 0.44 | | | 29.6 | | | |
| 25 | −30.524 | 2.50 | 1.81309 | 40.55 | 29.5 | L45 | | |
| 26* | −126.286 | 10.93 | | | 31.5 | | | |
| 27 | −698.643 | 10.22 | 1.81643 | 22.76 | 44.4 | L46* | | |
| 28 | −37.965 | 37.40 | | | 46.1 | | | |
| 29 | INFINITY | 3.00 | 1.51872 | 64.17 | 43.2 | COVER | | |
| 30 | INFINITY | 0.99 | | | 43.1 | | | |

Fig. 3

| | K | A | B | C | D |
|---|---|---|---|---|---|
| FIRST SURFACE | 0 | 2.33309E-06 | 4.62773E-10 | -2.39193E-13 | 4.86118E-16 |
| TWENTY-SIXTH SURFACE | 0 | 8.65779E-06 | 2.82536E-09 | -2.04850E-12 | -1.79204E-14 |

Fig. 4

| OBJECT DISTANCE | INFINITY | 1800 mm | 145 mm |
|---|---|---|---|
| FOCAL LENGTH | 29.00 | 28.93 | 28.26 |
| F No. | 1.69 | 1.69 | 1.69 |
| ANGLE OF VIEW | 36.79 | 36.79 | 36.84 |
| d10 | 3.76 | 4.79 | 13.55 |
| d12 | 11.78 | 10.75 | 2.00 |

# Fig. 5

(a)

SPHERICAL ABERRATION (mm)

ASTIGMATISM (mm)

DISTORTION (%)

(b)

SPHERICAL ABERRATION (mm)

ASTIGMATISM (mm)

DISTORTION (%)

(c)

SPHERICAL ABERRATION (mm)

ASTIGMATISM (mm)

DISTORTION (%)

# Fig. 6

MERIDIONAL

SAGITTAL

RELATIVE FIELD HEIGHT
1.00
( 36.79 )°

RELATIVE FIELD HEIGHT
0.80
( 30.90 )°

RELATIVE FIELD HEIGHT
0.60
( 24.14 )°

RELATIVE FIELD HEIGHT
0.40
( 16.59 )°

RELATIVE FIELD HEIGHT
0.00
( 0.000 )°

# Fig. 7

# Fig. 8

MERIDIONAL · SAGITTAL

RELATIVE FIELD HEIGHT
1.00
( 36.84 )°

RELATIVE FIELD HEIGHT
0.80
( 30.97 )°

RELATIVE FIELD HEIGHT
0.60
( 24.22 )°

RELATIVE FIELD HEIGHT
0.40
( 16.65 )°

RELATIVE FIELD HEIGHT
0.00
( 0.000 )°

# Fig. 9

(a)

(b)

# Fig. 10

| LENS SURFACE NUMBER (S) | RADIUS OF CURVATURE (Ri) | DISTANCE (di) | REFRACTIVE INDEX (nd) | ABBE NUMBER ($\nu$ d) | EFFECTIVE DIAMETER (Di) | LENS | | FOCAL LENGTH (mm) |
|---|---|---|---|---|---|---|---|---|
| 1* | 84.49 | 3.00 | 1.53947 | 74.70 | 59.9 | L11* | | G1 |
| 2 | 27.601 | 19.33 | | | 47.2 | | | −30.59 |
| 3 | 122.546 | 1.50 | 1.49845 | 81.55 | 40.7 | L12* | | |
| 4 | 32.323 | 9.78 | | | 37.0 | | | |
| 5 | −49.593 | 1.50 | 1.49845 | 81.55 | 36.9 | L13* | | |
| 6 | 78.463 | 0.30 | | | 37.3 | | | |
| 7 | 57.671 | 7.50 | 1.81643 | 22.76 | 37.7 | L14* | | |
| 8 | −106.585 | 3.17 | | | 37.3 | | | |
| 9 | −39.12 | 1.50 | 1.86290 | 24.80 | 37.3 | L15* | | |
| 10 | −67.658 | (VARIABLE) | | | 38.0 | | | |
| 11 | −98.713 | 4.00 | 1.69979 | 55.53 | 38.5 | L21 | | G2 |
| 12 | −61.518 | (VARIABLE) | | | 39.0 | | | 224.40 |
| 13 | 51.626 | 9.57 | 1.76651 | 40.10 | 46.0 | L31 | | G3 |
| 14 | −188.691 | 0.30 | | | 45.4 | | | 46.08 |
| 15 | 63.27 | 10.10 | 1.60520 | 65.44 | 42.3 | L32 | B31 | |
| 16 | −57.435 | 1.50 | 1.76167 | 27.51 | 40.5 | L33* | | |
| 17 | 154.791 | 4.13 | | | 37.4 | | | |
| 18 (STOP) | INFINITY | 11.00 | | | 35.3 | St | | |
| 19 | −47.942 | 1.20 | 1.76167 | 27.51 | 29.5 | L41* | B41 | G4 |
| 20 | 24.203 | 7.32 | 1.60520 | 65.44 | 29.0 | L42 | | 69.38 |
| 21 | 400.079 | 0.30 | | | 29.4 | | | |
| 22 | 48.981 | 1.20 | 1.65803 | 39.68 | 30.0 | L43* | B42 | |
| 23 | 25.472 | 12.00 | 1.53947 | 74.70 | 30.6 | L44* | | |
| 24 | −34.116 | 0.46 | | | 31.5 | | | |
| 25 | −36.059 | 2.50 | 1.81309 | 40.55 | 31.7 | L45 | | |
| 26* | −138.951 | 9.43 | | | 34.8 | | | |
| 27 | 652.846 | 10.22 | 1.81643 | 22.76 | 46.2 | L46* | | |
| 28 | −43.41 | 40.55 | | | 47.6 | | | |
| 29 | INFINITY | 3.00 | 1.51872 | 64.17 | 43.3 | COVER | | |
| 30 | INFINITY | 1.00 | | | 43.1 | | | |

Fig. 11

| | K | A | B | C | D |
|---|---|---|---|---|---|
| FIRST SURFACE | 0 | 2.45419E−06 | 8.03704E−11 | −2.61750E−14 | 2.98512E−16 |
| TWENTY−SIXTH SURFACE | 0 | 6.81291E−06 | 8.07638E−10 | −6.50111E−13 | −7.59401E−15 |

Fig. 12

| OBJECT DISTANCE | INFINITY | 1800 mm | 150 mm |
|---|---|---|---|
| FOCAL LENGTH | 28.99 | 28.91 | 28.12 |
| F No. | 1.67 | 1.68 | 1.68 |
| ANGLE OF VIEW | 36.84 | 36.87 | 37.33 |
| d10 | 2.00 | 3.05 | 11.67 |
| d12 | 20.65 | 19.60 | 10.98 |

# Fig. 13

(a)

SPHERICAL ABERRATION (mm)

ASTIGMATISM (mm)

DISTORTION (%)

(b)

SPHERICAL ABERRATION (mm)

ASTIGMATISM (mm)

DISTORTION (%)

(c)

SPHERICAL ABERRATION (mm)

ASTIGMATISM (mm)

DISTORTION (%)

# Fig. 14

MERIDIONAL     RELATIVE FIELD HEIGHT     SAGITTAL

RELATIVE FIELD HEIGHT
1.00
( 36.84 )°

RELATIVE FIELD HEIGHT
0.80
( 30.90 )°

RELATIVE FIELD HEIGHT
0.60
( 24.13 )°

RELATIVE FIELD HEIGHT
0.40
( 16.58 )°

RELATIVE FIELD HEIGHT
0.00
( 0.000 )°

# Fig. 15

MERIDIONAL                                                    SAGITTAL

RELATIVE FIELD HEIGHT
1.00
( 36.87 )°

RELATIVE FIELD HEIGHT
0.80
( 30.93 )°

RELATIVE FIELD HEIGHT
0.60
( 24.16 )°

RELATIVE FIELD HEIGHT
0.40
( 16.60 )°

RELATIVE FIELD HEIGHT
0.00
( 0.000 )°

# Fig. 16

MERIDIONAL       RELATIVE FIELD HEIGHT      SAGITTAL

RELATIVE FIELD HEIGHT
1.00
( 37.33 )°

RELATIVE FIELD HEIGHT
0.80
( 31.31 )°

RELATIVE FIELD HEIGHT
0.60
( 24.45 )°

RELATIVE FIELD HEIGHT
0.40
( 16.81 )°

RELATIVE FIELD HEIGHT
0.00
( 0.000 )°

Fig. 17

(a)

(b)

# Fig. 18

| LENS SURFACE NUMBER (S) | RADIUS OF CURVATURE (Ri) | DISTANCE (di) | REFRACTIVE INDEX (nd) | ABBE NUMBER ($\nu$d) | EFFECTIVE DIAMETER (Di) | LENS | | FOCAL LENGTH (mm) |
|---|---|---|---|---|---|---|---|---|
| 1* | 86.997 | 3.00 | 1.53775 | 74.70 | 64.0 | L11* | | G1 |
| 2 | 29.545 | 18.40 | | | 50.8 | | | −31.22 |
| 3 | 270.426 | 1.50 | 1.49700 | 81.55 | 46.4 | L12* | | |
| 4 | 36.736 | 10.92 | | | 41.9 | | | |
| 5 | −57.128 | 1.50 | 1.53775 | 74.70 | 41.8 | L13* | | |
| 6 | 76.919 | 0.30 | | | 42.6 | | | |
| 7 | 62.893 | 9.00 | 1.80810 | 22.76 | 43.1 | L14* | | |
| 8 | −92.343 | 4.09 | | | 42.9 | | | |
| 9 | −39.677 | 1.50 | 1.85478 | 24.80 | 42.7 | L15* | | |
| 10 | −70.124 | (VARIABLE) | | | 44.0 | | | |
| 11 | −81.28 | 4.00 | 1.78590 | 44.20 | 44.0 | L21 | | G2 |
| 12 | −57.049 | (VARIABLE) | | | 44.6 | | | 227.01 |
| 13 | 54.656 | 9.00 | 1.75700 | 47.82 | 47.1 | L31 | | G3 |
| 14 | −402.715 | 0.30 | | | 46.5 | | | 48.04 |
| 15 | 65.332 | 9.00 | 1.60300 | 65.44 | 44.4 | L32 | B31 | |
| 16 | −109.233 | 2.00 | 1.80000 | 29.84 | 42.8 | L33* | | |
| 17 | 323.58 | 7.00 | | | 40.8 | | | |
| 18 (STOP) | INFINITY | 11.50 | | | 36.5 | St | | |
| 19 | −47.39 | 1.50 | 1.85478 | 24.80 | 30.2 | L41 | B41 | G4 |
| 20 | 28.597 | 7.00 | 1.60300 | 65.44 | 30.1 | L42* | | 68.82 |
| 21 | −2786.658 | 0.30 | | | 30.5 | | | |
| 22 | 57.421 | 1.50 | 1.65412 | 39.68 | 31.2 | L43* | B42 | |
| 23 | 25.76 | 10.00 | 1.53775 | 74.70 | 31.0 | L44* | | |
| 24 | −43.622 | 0.85 | | | 31.0 | | | |
| 25 | −55.13 | 2.00 | 1.73077 | 40.51 | 31.4 | L45 | | |
| 26* | −183.797 | 11.09 | | | 33.0 | | | |
| 27 | 514.94 | 10.00 | 1.80810 | 22.76 | 45.2 | L46* | | |
| 28 | −45.681 | 44.18 | | | 46.7 | | | |
| 29 | INFINITY | 3.00 | 1.51680 | 64.17 | 43.3 | | | |
| 30 | INFINITY | 1.00 | | | 43.2 | | | |

# Fig. 19

|  | K | A | B | C | D |
|---|---|---|---|---|---|
| FIRST SURFACE | 0 | 2.15803E−06 | 1.25890E−10 | −1.31880E−13 | 3.06131E−16 |
| TWENTY−SIXTH SURFACE | 0 | 5.86972E−06 | −1.07571E−10 | 5.78513E−13 | −1.05175E−14 |

# Fig. 20

| OBJECT DISTANCE | INFINITY | 2000 mm | 190 mm |
|---|---|---|---|
| FOCAL LENGTH | 29.00 | 28.93 | 28.37 |
| F No. | 1.66 | 1.66 | 1.66 |
| ANGLE OF VIEW | 36.83 | 36.86 | 37.19 |
| d10 | 2.00 | 2.96 | 10.11 |
| d12 | 22.01 | 21.05 | 13.91 |

# Fig. 21

(a)

SPHERICAL ABERRATION (mm)    ASTIGMATISM (mm)    DISTORTION (%)

(b)

SPHERICAL ABERRATION (mm)    ASTIGMATISM (mm)    DISTORTION (%)

(c)

SPHERICAL ABERRATION (mm)    ASTIGMATISM (mm)    DISTORTION (%)

# Fig. 22

MERIDIONAL
SAGITTAL

RELATIVE FIELD HEIGHT
1.00
( 36.83 )°

0.04

-0.04

0.04

-0.04

RELATIVE FIELD HEIGHT
0.80
( 30.88 )°

0.04

-0.04

0.04

-0.04

RELATIVE FIELD HEIGHT
0.60
( 24.11 )°

0.04

-0.04

0.04

-0.04

RELATIVE FIELD HEIGHT
0.40
( 16.57 )°

0.04

-0.04

0.04

-0.04

RELATIVE FIELD HEIGHT
0.00
( 0.000 )°

0.04

-0.04

0.04

-0.04

# Fig. 23

MERIDIONAL                                          SAGITTAL

RELATIVE FIELD HEIGHT
1.00
( 36.86 )°

RELATIVE FIELD HEIGHT
0.80
( 30.91 )°

RELATIVE FIELD HEIGHT
0.60
( 24.13 )°

RELATIVE FIELD HEIGHT
0.40
( 16.59 )°

RELATIVE FIELD HEIGHT
0.00
( 0.000 )°

# Fig. 24

MERIDIONAL

SAGITTAL

RELATIVE FIELD HEIGHT
1.00
( 37.19 )°

RELATIVE FIELD HEIGHT
0.80
( 31.18 )°

RELATIVE FIELD HEIGHT
0.60
( 24.35 )°

RELATIVE FIELD HEIGHT
0.40
( 16.73 )°

RELATIVE FIELD HEIGHT
0.00
( 0.000 )°

# EP 3 734 344 A1

<table>
<tr><td colspan="2" style="text-align:center"><strong>INTERNATIONAL SEARCH REPORT</strong></td><td>International application No.<br>PCT/JP2018/047816</td></tr>
</table>

**A. CLASSIFICATION OF SUBJECT MATTER**
Int.Cl. G02B13/04(2006.01)i, G02B13/18(2006.01)i

According to International Patent Classification (IPC) or to both national classification and IPC

**B. FIELDS SEARCHED**

Minimum documentation searched (classification system followed by classification symbols)
Int.Cl. G02B13/04, G02B13/18

Documentation searched other than minimum documentation to the extent that such documents are included in the fields searched
Published examined utility model applications of Japan     1922–1996
Published unexamined utility model applications of Japan   1971–2019
Registered utility model specifications of Japan           1996–2019
Published registered utility model applications of Japan   1994–2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-128480 A (FUJINON CORPORATION) 10 June 2010, columns in relation to example 6, etc. | 1-4, 7-9, 14-17 |
| A | (Family: none) | 5-6, 10-13 |
| X | JP 2016-184136 A (SIGMA CORP.) 20 October 2016, columns in relation to numerical examples 1-8, etc. | 1, 4-6, 15-17 |
| A | (Family: none) | 2-3, 7-14 |

☒ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29.03.2019 | 09.04.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

34

**INTERNATIONAL SEARCH REPORT**

| International application No. |
| --- |
| PCT/JP2018/047816 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2012-118243 A (RICOH OPT IND CO., LTD.) 21 June 2012, paragraph [0036], columns in relation to examples 1-4, etc. (Family: none) | 1, 4, 7-9, 14, 17 |
| X | JP 2010-054693 A (FUJINON CORPORATION) 11 March 2010, columns in relation to examples 1-3, etc. & US 2010/0053764 A1, columns in relation to examples 1-3, etc. | 1-4, 17 |
| X | JP 2010-054692 A (FUJINON CORPORATION) 11 March 2010, columns in relation to examples 1-3, etc. & US 2010/0053570 A1, columns in relation to examples 1-3, etc. | 1-4, 17 |
| X | JP 2017-211480 A (FUJIFILM CORPORATION) 30 November 2017, columns in relation to examples 1-3, etc. & US 2017/0343778 A1, columns in relation to examples 1-3, etc. & CN 206818967 U | 1, 4-5, 17 |
| X | JP 2000-098222 A (COSINA CO., LTD.) 07 April 2000, columns in relation to example 3, etc. (Family: none) | 1, 15-17 |
| X | JP 2017-209154 A (OLYMPUS CORPORATION) 30 November 2017, columns in relation to numerical example 1, etc. (Family: none) | 1, 4, 17 |
| X | JP 2010-054694 A (FUJINON CORPORATION) 11 March 2010, columns in relation to examples 1, 2, etc. & US 2010/0053773 A1, columns in relation to examples 1-3, etc. | 1, 4, 17 |
| X | JP 2003-307672 A (CARL-ZEISS-STIFTUNG) 31 October 2003, columns in relation to table 1, etc. & US 2003/0189767 A1, columns in relation to example 1, etc. & DE 10215434 A1 | 1, 4, 17 |
| X | JP 2016-038547 A (NIKON CORPORATION) 22 March 2016, columns in relation to paragraph [0012], examples 1-4, etc. & WO 2016/024411 A1 | 1, 17 |

Form PCT/ISA/210 (continuation of second sheet) (January 2015)

**INTERNATIONAL SEARCH REPORT**

| International application No. |
| --- |
| PCT/JP2018/047816 |

[What is examined]

Claim 1 includes the recitation "a lens system having a first lens group that has a negative refractive power and is fixed when focusing is performed, a second lens group that has a positive refractive power and moves when focusing is performed, a third lens group that has a positive refractive power and is fixed when focusing is performed, and a fourth lens group that has a positive refractive power, is provided with an aperture stop on the object side, is fixed when focusing is performed, and is disposed closest to the image plane side, these lens groups being arranged in this order from the object side". The invention of claim 1 is construed as including lens systems formed by adding, to a lens system composed of four groups, another lens group (for example, a fifth lens group). Meanwhile, however, the description of this international application only discloses, as a specific example, a lens system composed of four groups and formed of "a first lens group that has a negative refractive power and is fixed when focusing is performed, a second lens group that has a positive refractive power and moves when focusing is performed, a third lens group that has a positive refractive power and is fixed when focusing is performed, and a fourth lens group that has a positive refractive power, is provided with an aperture stop on the object side, is fixed when focusing is performed, and is disposed closest to the image plane side, these lens groups being arranged in this order from the object side". In the technical field of lens systems, it is common technical knowledge that different numbers of lens groups forming a lens system, different signs (positive and negative) of the refractive power of each lens group result in significantly different optical properties (aberration, etc.). However, the description does not at all disclose any examples, etc. of lens systems (for example, the lens system composed of five groups mentioned above) formed by adding another lens group to the lens system composed of four groups. In addition, no such explanation based on principles is found that can make it understood that such lens systems (for example, the lens system composed of five groups mentioned above) that are not at all disclosed as examples have optical properties similar to those of the lens system composed of four groups disclosed as the specific example.

In view of this, it cannot be said that lens systems formed by, for example, adding a lens group not disclosed in the example of the description to the lens system composed of four groups can be made, by a person skilled in the art, to have optical properties similar to those in the example disclosed in the description, and the example disclosed in the description can be broadened or generalized to such lens systems incorporating a lens group not disclosed in the example of the description.

Accordingly, the invention of claim 1 goes beyond the scope disclosed in the description, and thus does not fulfill the requirement for support under PCT Article 6.

Thus, examination for this international application has been carried out on the scope supported and disclosed by the description, that is to say, those provided with the configuration noted above, alone (a lens system composed of four groups and formed of "a first lens group that has a negative refractive power and is fixed when focusing is performed, a second lens group that has a positive refractive power and moves when focusing is performed, a third lens group that has a positive refractive power and is fixed when focusing is performed, and a fourth lens group that has a positive refractive power, is provided with an aperture stop on the object side, is fixed when focusing is performed, and is disposed closest to the image plane side, these lens groups being arranged in this order from the object side").

Form PCT/ISA/210 (extra sheet) (January 2015)

**EP 3 734 344 A1**

**Patent documents cited in the description**

- JP 2001228391 A